(19) **Europäisches Patentamt / European Patent Office / Office européen des brevets**

(11) **EP 2 922 124 B1**

(12) **EUROPEAN PATENT SPECIFICATION**

(45) Date of publication and mention
of the grant of the patent:
**21.06.2017 Bulletin 2017/25**

(21) Application number: **13855595.8**

(22) Date of filing: **15.11.2013**

(51) Int Cl.:
*H01M 4/66* (2006.01)          *H01C 7/02* (2006.01)
*H01G 11/68* (2013.01)         *H01M 4/13* (2010.01)
*H01M 2/34* (2006.01)          *H01M 10/052* (2010.01)

(86) International application number:
**PCT/JP2013/080931**

(87) International publication number:
**WO 2014/077366 (22.05.2014 Gazette 2014/21)**

(54) **COLLECTOR, ELECTRODE STRUCTURE, ELECTRICITY STORAGE COMPONENT, AND COMPOSITION FOR COLLECTORS**

KOLLEKTOR, ELEKTRODENSTRUKTUR, ELEKTRIZITÄTSSPEICHERUNGSKOMPONENTE UND ZUSAMMENSETZUNG FÜR KOLLEKTOREN

COLLECTEUR, STRUCTURE D'ÉLECTRODE, COMPOSANT DE STOCKAGE D'ÉLECTRICITÉ, ET COMPOSITION POUR COLLECTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2012 JP 2012253755**

(43) Date of publication of application:
**23.09.2015 Bulletin 2015/39**

(73) Proprietors:
• **UACJ Corporation**
  **Tokyo 100-0004 (JP)**
• **UACJ Foil Corporation**
  **Chuo-ku**
  **Tokyo**
  **1030026 (JP)**
• **Furukawa Electric Co., Ltd.**
  **Chiyoda-ku**
  **Tokyo 100-8322 (JP)**

(72) Inventors:
• **SAITO, Sohei**
  **Tokyo 101-8970 (JP)**
• **KATO, Osamu**
  **Tokyo 101-8970 (JP)**
• **HONKAWA, Yukiou**
  **Tokyo 101-8970 (JP)**

• **YAEGASHI, Tatsuhiro**
  **Tokyo 101-8970 (JP)**
• **KATAOKA, Tsugio**
  **Kusatsu-shi,**
  **Shiga 525-0042 (JP)**
• **INOUE, Mitsuya**
  **Kusatsu-shi,**
  **Shiga 525-0042 (JP)**
• **YAMABE, Satoshi**
  **Kusatsu-shi,**
  **Shiga 525-0042 (JP)**
• **MORISHIMA, Yasumasa**
  **Tokyo 100-8322 (JP)**
• **ITO, Takayori**
  **Tokyo 100-8322 (JP)**
• **HARA, Hidekazu**
  **Tokyo 100-8322 (JP)**
• **IIDA, Takahiro**
  **Tokyo 100-8322 (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 2 922 122          EP-A1- 2 980 898**
**JP-A- 2002 064 004       JP-A- 2002 343 606**
**JP-A- 2009 176 599       JP-A- 2010 244 788**

## Description

## TECHNICAL FIELD

The present invention relates to current collectors, electrode structures, electrical storage devices (non-aqueous electrolyte batteries, electrical double layer capacitors, lithium ion capacitors, and the like), and to a composition for current collectors.

## BACKGROUND

Regarding lithium ion batteries in the vehicle and the like, a high speed charge/discharge characteristics (high rate characteristics) is required at usual usage, and a so-called shut down function (PTC function) to terminate charge/discharge automatically and safely is required when an accident such as malfunction occurs. With respect to the former requirement, a technique to minimize the grain size of the active material and a technique to form a conductive layer onto the current collector has been known. On the other hand, with respect to the latter requirement, a system to improve the safety of the battery has been made. For example, a safety valve is used to prevent the inner pressure from increasing, and a structure to cut off the current when heat generation occur is provided by incorporating a PTC (Positive Temperature Coefficient) element. Here, the PTC element is an element of which resistance value increases along with the increase in temperature. Regarding batteries, a technique to provide the PTC function to a separator has been known. The separator fuses at high temperature, and thus micropores are blocked. Accordingly, Li ions are blocked, thereby terminating the electrode reaction under over-heated circumstances. However, there are cases where the shut down by the separator is incomplete and thus the temperature increases to above the melting point of the separator, and cases where the temperature increase in the external surroundings result in the meltdown of the separator. Such cases would result in an internal short-circuit. Then, the shut down function of the separator can no longer be counted on, and the battery would be in the state of thermal runaway.

Therefore, a technique to provide charge/discharge characteristics during usual usage and to improve safety when an accident such as malfunction occurs is suggested. For example, Patent Literature 1 discloses of increasing the resistance when the temperature rises, by using polyvinylidene difluoride for the conductive layer, the polyvinylidene difluoride having a fusion starting temperature of 130°C or higher and lower than 155°C, the mass ratio of $\alpha$-crystal and $\beta$-crystal ($\alpha/\beta$) being 0.35 to 0.56.

Patent Literature 2 discloses of achieving resistance of $100\Omega cm$ or higher at elevated temperature by using a conductive layer containing a polyolefin-based crystalline thermoplastic resin having a melting point of 100 to 120°C.

Patent Literature 3 relates to polymer composition comprising titanium carbide as an electroconductive material filler dispersed in a crystalline ethylene-acrylic acid copolymer crosslinked with an epoxy resin. The composition has a positive coefficient function.

## CITATION LIST

## PATENT LITERATURE

Patent Literature 1:     JP 2012-104422A
Patent Literature 2:     JP 2001-357854A
Patent Literature 3:     JP 2002-343606A

## SUMMARY OF THE INVENTION

## TECHNICAL PROBLEM

However, the conventional techniques described in the afore-mentioned literatures had room for improvement in the following aspects, and thus were problematic in terms of providing safety certainly.

First of all, regarding the technique of Patent Literature 1, the effect depends on the crystal condition of the resin used for the conductive layer. That is, thermal history such as the heating temperature during the active material layer coating step and the drying step for removing water would change the crystal condition, resulting in cases where it becomes difficult to increase the resistance.

Secondly, regarding the technique of Patent Literature 2, the so-called high rate characteristics of the high speed charge/discharge was not sufficient, and the technique was not suitable for high speed charge/discharge at usual conditions. In addition, since the resin used was a thermoplastic resin, the resin would expand when the temperature becomes 100°C or higher during the active material coating step, and thus resistance would increase regardless of the existence of the electrolyte solution. Further, the temperature during manufacture need be kept below 100°C, since the condition of the resin would become condition different if the resin fuses, resulting in remarkable drop in productivity.

In addition, the electrode layers of Patent Literatures 1 and 2 can achieve the PTC function due to the increase in the resistance after realizing the PTC function; however, there were cases where the resistance decreases when the temperature further increases. Therefore, the PTC function was difficult to maintain, and was problematic in terms of safety.

The present invention has been made by taking the afore-mentioned circumstances into consideration. An object of the present invention is to provide a current collector having high safety, the current collector being capable of stably maintaining the PTC function even when the temperature further increases after realizing the PTC function when used for the electrode structure of electrical storage devices such as non-aqueous electrolyte batteries, electrical double layer capacitors, and lithium ion capacitors; electrode structures; electrical storage devices; and composition for current collectors.

**SOLUTION TO PROBLEM**

The present inventors have conducted earnest investigation to solve the afore-mentioned problem, and have found out that by adopting the following constitution for the current collector, the PTC function can be stably maintained. That is, a resin layer having conductivity is provided to at least one side of a conductive substrate, special polyolefin-based emulsion particles are used for the resin structuring the composition for current collector, and the polyolefin-based emulsion particles are cross-linked (including curing, hereinafter the same) by using a cross-linker (including a curing agent, hereinafter the same). When the current collector thus obtained is used for the electrical storage device of lithium ion batteries and the like, emulsion condition can be maintained even when the temperature increases after the realization of the PTC function, thereby allowing to maintain the PTC function stably. Accordingly, the present invention was accomplished.

Therefore, according to the present invention, a current collector comprising a conductive substrate and a resin layer provided onto at least one side of the conductive substrate, is provided. Here, the resin layer is obtained by a paste including polyolefin-based emulsion particles, a conductive material, and a cross-linker. The polyolefin-based emulsion particles include a polyolefin-based resin, the both end terminals of the polyolefin-based resin being modified with carboxylic acid or carboxylic acid anhydride.

Since the special polyolefin-based emulsion particles are used, the emulsion condition can be maintained even when the temperature further increases after realizing the PTC function, thereby allowing to maintain the PTC function stably; when such current collector is used for the electrode structure of electrical storage devices such as non-aqueous electrolyte batteries, electrical double layer capacitors, and lithium ion capacitors.

Further, according to the present invention, an electrode structure comprising the afore-mentioned current collector, and an active material layer or an electrode material layer formed on the resin layer of the current collector, is provided.

Since the afore-mentioned current collector is used, the emulsion condition can be maintained even when the temperature further increases after realizing the PTC function, thereby allowing to maintain the PTC function stably; when such electrode structure is used for the electrical storage devices such as non-aqueous electrolyte batteries, electrical double layer capacitors, and lithium ion capacitors.

In addition, according to the present invention, an electrical storage device comprising the afore-mentioned electrode structure, is provided.

Since the afore-mentioned electrode structure is used, the emulsion condition can be maintained even when the temperature further increases after realizing the PTC function, thereby allowing to maintain the PTC function stably; when such electrical storage device is used.

Further, according to the present invention, a composition for current collector to obtain a current collector by performing cross-linking after coating the composition onto the conductive substrate, is provided. The composition for current collector comprises polyolefin-based emulsion particles, a conductive material, and a cross-linker. The polyolefin-based emulsion particles comprises a polyolefin-based resin, both end terminals of the polyolefin-based resin being modified with carboxylic acid or carboxylic acid anhydride.

Since the special polyolefin-based emulsion particles are used, the emulsion condition can be maintained even when the temperature further increases after realizing the PTC function, thereby allowing to maintain the PTC function stably; when such composition for current collector is used to obtain the current collector by cross-linking the composition after coating the composition onto the conductive substrate, and then the current collector is used for the electrode structure of electrical storage devices such as non-aqueous electrolyte batteries, electrical double layer capacitors, and lithium ion capacitors.

**EFFECT OF THE INVENTION**

According to the present invention, the emulsion condition can be maintained even when the temperature further increases after realizing the PTC function, thereby enabling to maintain the PTC function stably.

**BRIEF DESCRIPTION OF THE DRAWINGS**

[FIG. 1] FIG. 1 is a cross sectional view showing the structure of the current collector according to one embodiment of the present invention.
[FIG. 2] FIG. 2 is a cross sectional view showing the structure of the electrode structure according to one embodiment of the present invention.
[FIG. 3] FIG. 3 is a schematic diagram showing the structure of the polyolefin-based emulsion particles used in one embodiment of the present invention.
[FIG. 4] FIG. 4 is a schematic diagram showing the internal condition of the resin layer, when the resin layer of the electrode structure according to one embodiment of the present invention is placed at normal temperature.
[FIG. 5] FIG. 5 is a schematic diagram showing the internal condition of the resin layer, when the resin layer of the electrode structure according to one embodiment of the present invention is placed at elevated temperature.
[FIG. 6] FIG. 6 is a schematic diagram showing the internal condition of the resin layer at elevated temperature, the resin layer of the electrode structure being different from that of FIG. 5 in that the polyolefin-based emulsion particles are not cross-linked.

**DESCRIPTION OF EMBODIMENTS**

Hereinafter, the embodiments of the present invention will be described with reference to the figures. Here, in all of the figures, similar constructing elements are provided with similar symbols, and explanation thereof is omitted where applicable.

<Entire Structure>

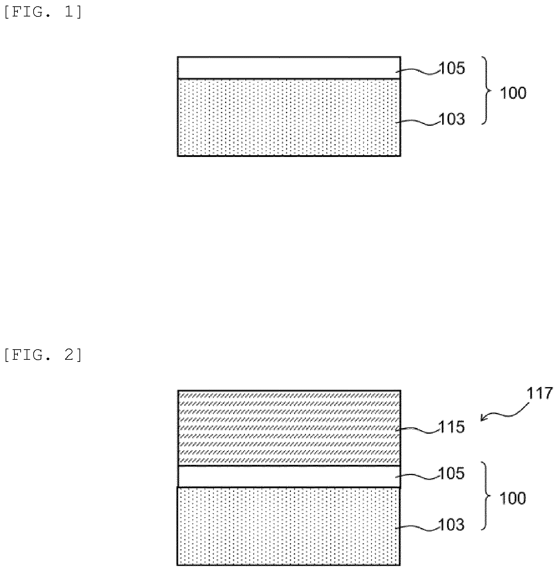

FIG. 1 is a cross sectional view showing the structure of the current collector of the present embodiment. As shown in FIG. 1, the current collector 100 of the present embodiment is provided with a resin layer 105 having conductivity on at least one side of a conductive substrate 103.

FIG. 2 is a cross sectional view showing the structure of the electrode structure structured by using the current collector of the present embodiment. As shown in FIG. 2, an active material layer or an electrode material layer 115 is formed onto the resin layer 105 of the current collector 100 of the present embodiment. Accordingly, an electrode structure 117 suitable for the non-aqueous electrolyte batteries such as lithium ion batteries, electrical double layer capacitors, or lithium ion capacitors can be prepared.

<Mechanism of Maintaining PTC Function>

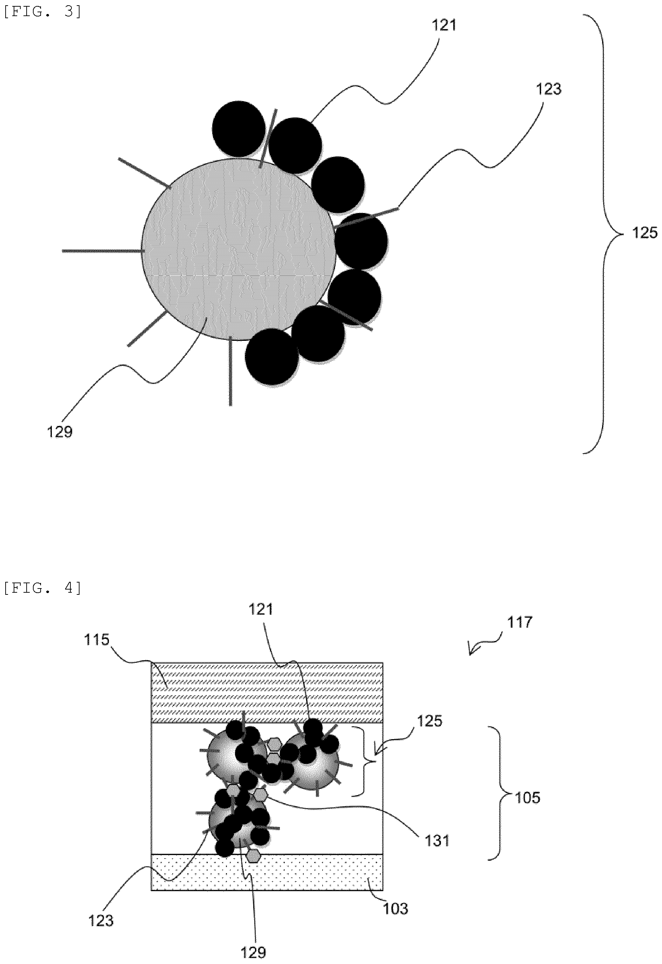

FIG. 3 is a schematic diagram showing the structure of the polyolefin-based emulsion particles used in one embodiment of the present invention. The polyolefin-based emulsion particles 125 used in the present embodiment are water-borne emulsion, and contain polyolefin-based resin 129, of which both end terminals are modified with carboxylic acid or with carboxylic acid anhydride. The hydrophobic portion of the polyolefin-based resin 129 is mainly distributed at the center portion of the polyolefin-based emulsion particles 125. On the other hand, a hydrophilic cross-linking group 123 positioned at both end terminals of the polyolefin-based resin 129 is mainly exposed at the surface of the polyolefin-based emulsion particles 125. The hydrophilic cross-linking group 123 is introduced at the both end terminals of the polyolefin-based resin 129 by modifying the polyolefin-based resin 129 with carboxylic acid or with carboxylic acid anhydride. The cross-linking group 123 derived from the carboxylic acid or the carboxylic acid anhydride (for example, carboxylic group) has high hydrophilicity, and thus the cross-linking group 123 is stable when exposed outside of the polyolefin-based emulsion particles 125. Here, conductive material 121 such as carbon powder is adhered onto the surface of the polyolefin-based emulsion particles 125.

FIG. 4 is a schematic diagram showing the internal condition of the resin layer, when the resin layer of the electrode structure according to one embodiment of the present invention is placed at normal temperature. The resin layer 105 of the current collector 100 of the present embodiment includes the polyolefin-based emulsion particles 125, cross linker 131, and conductive material 121. The conductive material 121 is distributed at the surface of or in the gap of the polyolefin-based emulsion particles 125 so as to contact with each other during normal usage, thereby forming a conductive pathway penetrating the resin layer 105. That is, the polyolefin-based emulsion particles 125 as shown in FIG. 3 are distributed so as to overlap with each other, thereby allowing the conductive material 121 to form a network, realizing conductivity. In addition, the cross-linker 131 is cross-linked with the cross-linking group 123 derived from the carboxylic acid or the carboxylic acid anhydride exposed at the surface of the polyolefin-based emulsion particles. Here, when the cross-linking group 123 such as carboxylic group exposed at the surface of the polyolefin-based emulsion particles 125 is cross-linked using the cross-linker 131, the cross-linker 131 cannot come inside the polyolefin-based emulsion particles 125, and thus the polyolefin-based resin 129 would not be cured.

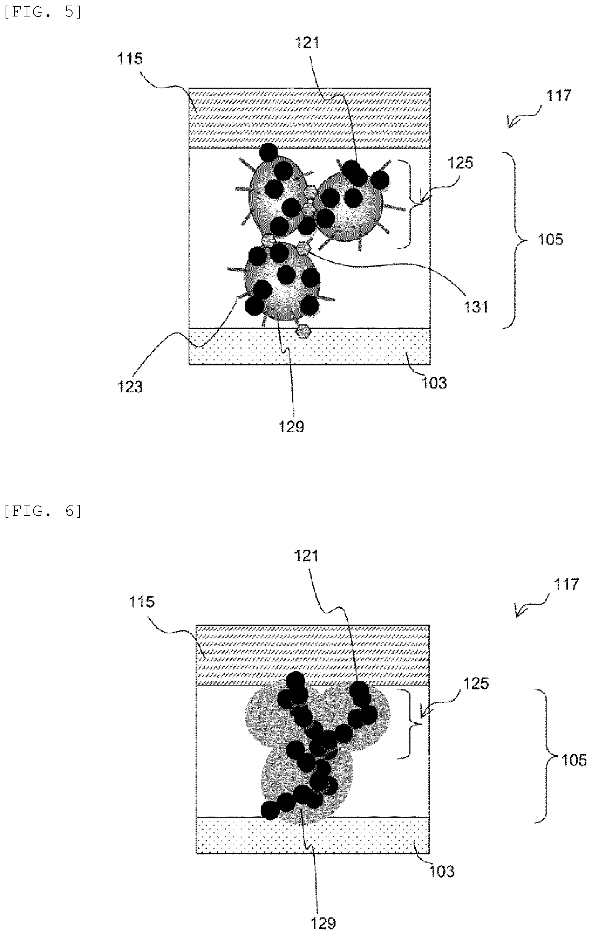

FIG. 5 is a schematic diagram showing the internal condition of the resin layer, when the resin layer of the electrode structure according to one embodiment of the present invention is placed at elevated temperature. In the present embodiment, polyolefin-based resin 129 modified with carboxylic acid (or with carboxylic acid anhydride) such as maleic acid is used as the polyolefin-based emulsion particles 125. The polyolefin-based emulsion particles 125 are cross-linked by the cross-linker 131, and thus the polyolefin-based emulsion particles 125 maintains the emulsion condition even when the temperature increases after realizing the PTC function, thereby maintaining the PTC function. That is, the elastic modulus of the resin layer 105 at elevated temperature can be improved, and volume increase by expansion is enabled.

Therefore, the resin layer 105 of the present embodiment can realize the PTC function when an accident occurs. The PTC function can be provided by increasing the resistance, which is accomplished by expanding the space (decrease the density of conductive fine particles in the resin layer 105) between the conductive materials 121 in the resin layer 105. Here, such expansion is obtained as a result of the volume of the resin layer 105 being increased by the expansion of the polyolefin-based emulsion particles 125. That is, the polyolefin-based resin 129 portion in the polyolefin-based emulsion particles 125 starts to expand by thermal expansion, thereby cutting the network of the conductive materials 121 at the surface of the polyolefin-based emulsion particles 125 to increase the resistance. Accordingly, even when the temperature of the resin layer 105 further increases by thermal runaway or the like, resistance is maintained by the synergistic effect of the polyolefin-based emulsion particles 125, cross-linker 131, and the conductive material 121. As a result, the PTC function is maintained stably. That is, since the cross-linking groups 123 exposed at the outer side portion of the polyolefin-based emulsion particles 125 are cross-linked, the elasticity at elevated temperature can be improved. Accordingly, fusion of the polyolefin-based emulsion particles can be prevented, and the drop in the resistance can be prevented.

On the other hand, FIG. 6 is a schematic diagram showing the internal condition of the resin layer at elevated temperature, the resin layer of the electrode structure being different from that of FIG. 5 in that the polyolefin-based emulsion particles are not cross-linked. A case where a polyolefin-based resin 129 having large coefficient of thermal expansion without cross-linking is used as the resin layer 105 having the PTC function will be described. Regarding such resin layer 105, the resistance increases when the PTC function is realized, but there are cases where the resistance decreases when the temperature further increases. The reason for such phenomena is that the polyolefin-based resin 129 realizes the PTC function by the fusion of the polyolefin-based resin 129, however, further fusion allows re-aggregation of the polyolefin-based resin 129 or the conductive 121, thereby re-forming a local network of the conductive material 121 resulting in resistance decrease. That is, when the polyolefin-based emulsion particles 125 are not cross-linked with each other, the polyolefin-based emulsion particles 125 would fuse with each other at elevated temperature, and the polyolefin-based resin 129 and the conductive material 121 would aggregate to decrease the resistance again, and slight compression would move the resin layer to allow the active material layer 115 do directly contact with the conductive substrate 103. Such problems are remarkable especially when the resin layer 105 is thin.

<Explanation of Each Constitution>

(1. Conductive Substrate)

The current collector 100 of the present embodiment is obtained by coating the composition for current collector on at least one side of the conductive substrate 103, followed by cross-linking to cure the composition for current collector. As the conductive substrate 103, the ones known as various metal foils for non-aqueous electrolyte batteries, electrical double layer capacitors, and lithium ion capacitors can be used in general. Specifically, various metal foils for the positive electrodes and negative electrodes can be used, such as aluminum foil, aluminum alloy foil, copper foil, stainless steel foil, nickel foil and the like. Among these, aluminum foil, aluminum alloy foil, and copper foil are preferable in terms of the balance between the conductivity and cost. There is no particular limitation regarding the thickness of the conductive substrate 103. Here, the thickness is preferably $5\mu$m or more and $50\mu$m or less. When the thickness is less than $5\mu$m, the strength of the foil would not be sufficient, and thus there are cases where the formation or the resin layer becomes difficult. On the other hand, when the thickness exceeds $50\mu$m, the other constitutional components, especially the active material layer or the electrode layer need be made thin. Accordingly, in a case where the current collector is used for the electrical storage device of non-aqueous electrolyte batteries, electrical double layer capacitors, lithium ion capacitors and the like, the thickness of the active material layer need be made thin, resulting in insufficient capacity. Here, the thickness of the conductive substrate can be in the range of two values selected from the group consisting of 5, 10, 15, 20, 25, 30, 35, 40, 45, and 50$\mu$m.

(2. Polyolefin-based Emulsion Particles)

FIG. 3 is a schematic diagram showing the structure of the polyolefin-based emulsion particles used in the present embodiment. In the present embodiment, polyolefin-based emulsion particles 125 containing the polyolefin-based resin 129 as the main component is used. Here, both end terminals (of the molecular chain) of the polyolefin-based resin 129 is modified with carboxylic acid (or carboxylic acid anhydride) having one or more carboxyl group. That is, the resin component used for the resin layer 105 of the present embodiment includes the polyolefin-based emulsion particles 125, and may consist of only the polyolefin-based emulsion particles 125 or may contain other resin component.
The main component of the polyolefin-based emulsion particles 125 used in the present embodiment is a polypropylene resin, a polyethylene resin, a polypropylene-polyethylene copolymer resin, or a mixture of these resins. Here, both end terminals of these resins are modified with carboxylic acid (or carboxylic acid anhydride) having one or more carboxyl group. A maleic acid-modified polypropylene resin, a maleic acid-modified polyethylene resin, a maleic acid-modified polyethylene-polypropylene block polymer resin, a maleic acid-modified polyethylene-polypropylene graft polymer resin, and a mixture of a maleic acid-modified polypropylene resin and a maleic acid-modified polyethylene resin are especially preferable.
When both end terminals are not modified with carboxylic acid (or carboxylic acid anhydride) having one or more carboxyl group, the cross-linking group 123 cannot be formed. Accordingly, the cross-linking by the cross-linker 131 would not proceed, thereby resulting in unfavorable cases where the resistance decreases when the temperature further rises after realization of the PTC function. In addition, when a polyolefin-based resin 129 modified with the carboxylic acid (or carboxylic acid anhydride) having one or more carboxyl group in the molecular chain rather than at the end terminal is used, the polyolefin-based resin 129 itself would be cured even when a water borne emulsion is prepared. Accordingly, it is unfavorable since the PTC function cannot be realized. Further, when a solution type (in organic solvent) polyolefin-based resin is used rather than the polyolefin-based emulsion particles 125, the connection between the conductive material 121 is difficult to disconnect when the PTC function is realized, even when the polyolefin-based resin having both end terminals modified with the carboxylic acid (or carboxylic acid anhydride) having one or more carboxyl group is used. Accordingly, it can be unfavorable since it is difficult to increase the resistance.
Here, the polyolefin-based emulsion particles 125 used in the present embodiment has a core-shell structure, comprising a core particle containing the polyolefin-based resin 129 as the main component and a shell layer containing the conductive material 121. Therefore, sufficient conductivity can be obtained at normal temperature even when the ratio of the conductive material 121 against the polyolefin-based resin 129 is lowered considerably. That is, such core-shell structure would result in relative high ratio of the polyolefin-based resin 129 against conductive material 121. Accordingly, it is effective in terms of realizing high insulating property when the PTC function is realized.
There is no particular limitation regarding the carboxylic acid (or carboxylic acid anhydride) for modifying the polyolefin-based resin 129 used in the present embodiment. Here, it is preferable to use maleic acid, pyromellitic acid, citric acid, tartaric acid, oxalic acid, mellitic acid, terephthalic acid, adipic acid, fumaric acid, itaconic acid, trimellitic acid, and isophthalic acid for example. It is especially preferable to modify the resin using the maleic acid in terms of adhering property with metal. Here, each of these acids can be an acid anhydride.

(3. Conductive Material)

Since the insulating property would be high when the resin layer 105 of the present embodiment contains only the polyolefin-based emulsion particles 125, conductive material 121 need be formulated in order to provide electron conductivity. As the conductive material 121 used in the present embodiment, known carbon powders and metal powders can be used for example. Among these, carbon powders are preferable. As the carbon powder, acetylene black, Ketjen black, furnace black, carbon nanotubes, carbon fibers, various graphite particles and the like can be used, and mixtures thereof can also be used.
There is no particular limitation regarding the formulation amount of the conductive material 121. Here, in order to achieve the desired PTC function with high safety, it is preferable that the PTC function can be achieved and safety can be maintained with smaller amount, when compared with the binder resin for normal carbon coatings or active material layer. Specifically, the formulation amount of the conductive material 121 with respect to 100 parts by mass of the polyolefin-based emulsion particles 125 is preferably 5 to 50 parts by mass, more preferably 7 to 45 parts by mass, and further more preferably 10 to 40 parts by mass. When the formulation amount is less than 5 parts by mass, the volume resistivity of the resin layer 105 becomes high, resulting in cases where the conductivity necessary as the current collector 100 cannot be obtained. On the contrary, when the formulation amount exceeds 50 parts by mass, the connection of the conductive material 121 cannot be disconnected even when the volume of the resin layer expands, thereby resulting in cases where sufficient resistance cannot be obtained. The conductive material 121 can be dispersed in the resin solution by using a planetary mixer, a ball mill, a homogenizer, and the like. Here, the formulation amount of the conductive material 121 can be in the range of two values selected from the group consisting of 5, 6, 7, 8, 9, 10, 15, 20, 25, 30, 35, 40, 45, and 50 parts by mass.

(4. Cross-linker)

There is no particular limitation regarding the cross-linker 131 used in the present embodiment. Here, the cross-linker 131 is preferably one or more type of a cross-linker having two or more cross-linking functional groups, selected from the group consisting of an epoxy-based cross-linker, a melamine-based cross-linker, an isocyanate-based cross-linker, a polyoxyalkylene-based cross-linker, and a carbodiimide-based cross-linker.

(4-1. Epoxy-based Cross-linker)

The epoxy-based cross-linker used in the present embodiment is a cross-linker having two or more epoxy groups in its molecule. Here, glycerol polyglycidyl ether, polyglycerol polyglycidyl ether, and sorbitol polyglycidyl ether can be mentioned for example.

(4-2. Melamine-based Cross-linker)

As the melamine-based cross-linker of the present embodiment, a cross-linker having two or more melamine groups in its molecule can be used. The melamine-based cross-linker is obtained by forming a methylol group via the condensation reaction of melamine and formaldehyde (polynuclear melamine-based cross-linker can be obtained by further addition reaction), followed by alkylating the methylol group with alcohol (for example, methyl alcohol and butyl alcohol). Here, a fully alkylated type melamine which is alkylated fully, a methylol type melamine, and an imino type melamine derivatives can be mentioned for example.

(4-3. Isocyanate-based Cross-linker)

As the isocyanate-based cross-linker of the present embodiment, a cross-linker having two or more isocyanate groups in its molecule can be used. Here, aromatic polyisocyanate, aliphatic polyisocyanate, alicyclic polyisocyanate, and mixtures thereof can be used. Specifically, 2,4-tolylene diisocyanate, 2,6-tolylene diisocyanate, a mixture of 2,4-tolylene diisocyanate and 2,6-tolylene diisocyanate, crude tolylene diisocyanate, crude methylene diphenyl diisocyanate, 4,4',4"-triphenylmethylene triisocyanate, xylene diisocyanate, m-phenylene diisocyanate, naphthylene-1,5-diisocyanate, 4,4'-biphenylene diisocyanate, 4,4'-diphenylmethane diisocyanate, 3,3'-dimethoxy-biphenyl diisocyanate, 3,3'-dimethyldiphenylmethane-4,4'-diisocyanate, tetramethylxylene diisocyanate, hexamethylene diisocyanate, isophorone diisocyanate, 4,4'-dicyclohexylmethane diisocyanate, and mixtures thereof can be mentioned for example. In addition, carbodiimide cross-linkers manufactured by using these isocyanates as the raw material can be used.

(4-4. Polyoxyalkylene-based Cross-linker)

As the polyoxyalkylene-based cross-linker of the present embodiment, a polyoxyalkylene-based resin having two or more hydroxyl groups in its molecule can be used. For example, polyoxyethylene glycol, polypropylene glycol, polybutylene glycol, polyethylene oxide, polyethylene glycol glyceryl ether, polypropylene glyceryl ether, polypropylene diglyceryl ether, polypropylene sorbitol ether, polyethylene glycol-polypropylene glycol block copolymer, polyoxytetramethylene-polyoxyethylene glycol random copolymer, polytetramethylene glycol, polyoxytetramethylene-polyoxypropylene glycol random copolymer can be mentioned. In addition, these polyoxyalkylene-based resin can be modified with carboxyl groups of sorbitan, oleic acid, lauryl acid, palmitic acid, stearic acid, and the like; with alkyl ether modified derivatives; with derivatives of fatty acid esters or glycerin esters; and with copolymers thereof.

(4-5. Carbodiimide-based Cross-linker)

The carbodiimide-based cross-linker used in the present embodiment is a substance having a functional group shown by -N=C=N-, and can cross-link the resin by reacting with a carboxyl group. Specifically, 1-ethyl-3-(3-dimethylaminopropyl)carbodiimide hydrochloride and diisopropyl carbodiimide can be mentioned for example.

(4-6. Formulation Amount)

There is no particular limitation regarding the formulation amount. Here, it is preferable that the cross-linker 131 is formulated by 0.1 to 50 parts by mass with respect to 100 parts by mass of the resin component of the polyolefin-based emulsion particles 125. When the formulation amount is 0.1 parts by mass or less, the resistance would decrease after the realization of the PTC function, which is unfavorable. On the other hand, when the formulation amount exceeds 50 parts by mass, the ratio of the emulsion type olefin resin would become low, and thus it becomes difficult to increase the resistance at elevated temperature, which is unfavorable. Here, the formulation amount of the cross-linker 131 can be in the range of two values selected from the group consisting of 0.1, 0.2, 0.3, 0.4, 0.5, 1, 5, 10, 15, 20, 25, 30, 35, 40, 45, and 50 parts by mass.

(5. Resin Layer)

FIG. 1 is a cross sectional view showing the structure of the current collector according to the present embodiment. The current collector 100 of the present embodiment comprises the resin layer 105 which uses the afore-mentioned composition for current collector. When the resin layer 105 is used as the positive electrode, it is preferable that the resin layer 105 has a PTC function and is provided on the conductive substrate 103. Here, it is preferable that the resin layer 105 is provided as a separate constitution especially from the active material layer 115, thereby achieving high PTC (shut down function) and the high rate characteristics of the battery, while enabling efficient achievement of the PTC function. That is, the adhesion property between the conductive substrate 103 and the active material layer 115 can be improved, the shut down function and excellent high speed charge/discharge characteristics can both be achieved, and the current collector can be suitably used for non-aqueous electrolyte batteries and electrical storage devices with excellent safety.

There is no particular limitation regarding the method for forming the resin layer 105 having conductivity used in the present embodiment. Here, it is preferable to first prepare a composition for current collector (paste) by mixing the polyolefin-based emulsion particles 125, conductive material 121, and cross-linker 131 in water or aqueous solution; followed by coating the composition for current collector (paste) onto the conductive substrate 103. As the method for coating, a roll coater, a gravure coater, and a slit die coater can be used for example.

With respect to the current collector 100 of the present embodiment, the coating amount of the composition for current collector (paste) being coated to form the resin layer 105 is preferably 0.05 to 5 $g/m^2$. When the coating amount is 0.05 $g/m^2$ or less, the coating would have unevenness, resulting in cases where the PTC function is not realized. On the other hand, when the coating amount exceeds 5 $g/m^2$, the volume of the active material of the battery would decrease, resulting in cases where the battery characteristics deteriorate. Here, the coating amount can be in the range of two values selected from the group consisting of 0.05, 0.1, 0.25, 0.5, 1, 2.5, and 5 $g/m^2$.

After the composition for current collector (paste) is coated onto the conductive substrate 103, the composition is baked to cross-link (cure) the composition for current collector (paste), thereby forming the resin layer 105. There is no particular limitation regarding the baking temperature. Here, the baking temperature is preferably 80 to 200°C for example. When the baking temperature is below 80°C, the curing would be insufficient, and thus can be problematic when the adhesion property with the conductive substrate is insufficient. On the other hand, when the baking temperature exceeds 200°C, the resin would fuse depending on the type of the polyolefin-based resin used, and thus can be problematic when the emulsion particles are not formed. Here, the baking temperature can be in the range of two values selected from the group consisting of 80, 90, 100, 110, 120, 130, 140, 150, 160, 170, 180, 190, and 200°C.

In addition, there is no particular limitation regarding the baking period. Here, the baking period is preferably 10 to 200 seconds for example. When the baking period is shorter than 10 seconds, the curing would be insufficient, and thus can be problematic when the adhesion property with the conductive substrate is insufficient. On the other hand, when the baking period exceeds 200 seconds, the resin would fuse depending on the type of the polyolefin-based resin used, and thus can be problematic when the emulsion particles are not formed. Here, the baking period can be in the range of two values selected from the group consisting of 10, 20, 30, 40, 50, 60, 70, 80, 90, 100, 120, 140, 160, 180, and 200 seconds.

Here, in order to adjust the degree of cross-linking in the resin layer 105, it is preferable to alter the amount of the cross-linker formulated in the composition for current collector (paste), or to alter the type of the cross-linker. It is preferable to alter the amount or the type of the cross-linker, measure the gel fraction, and confirm that the gel fraction (degree of cross-linking) is 50 to 95%. When the gel fraction is less than 50%, the degree of cross-linking would be low, and thus the resin would fuse at a temperature above the PTC realizing temperature, and the conductive material would aggregate due to the re-aggregation of the fused resin, resulting in cases where the resistance decreases (conductivity emerges) again. On the other hand, when the gel fraction exceeds 95%, the degree of cross-linking would be too high, and thus the resin becomes difficult to expand, resulting in cases where the PTC function cannot be realized. Therefore, it is important to adjust the degree of cross-linking of the resin layer 105 within a desired range. Here, the gel fraction can be in the range of two values selected from the group consisting of 50, 55, 60, 65, 70, 75, 80, 85, 90, and 95%.

(6. Electrode Structure)

FIG. 2 is a cross sectional view showing the structure of the electrode structure formed by using the current collector of the present embodiment. The electrode structure 117 of the present embodiment can be obtained by forming an active material layer 115 or an electrode material layer 115 on the resin layer 105 of the current collector 100 of the present embodiment. With the electrode structure 117 for the electrical storage device having the electrode material layer 115 formed thereon, a separator, and a non-aqueous electrolyte solution, a non-aqueous electrolyte battery such as a lithium ion secondary battery (including parts for batteries) can be manufactured. Regarding the electrode structure 117 for the non-aqueous electrolyte battery and the non-aqueous electrolyte battery, known parts for the non-aqueous electrolyte batteries can be used for the parts other than the current collector 100.

Here, the active material layer 115 formed as the electrode structure 117 of the present embodiment can be the one suggested for the non-aqueous electrolyte batteries. For example, regarding the positive electrode, $LiCoO_2$, $LiMnO_4$, $LiNiO_2$ and the like as the active material and carbon black such as acetylene black and the like as the conductive material are dispersed in PVDF or a water dispersion type PTFE as a binder to give a paste. The paste is then coated on the current collector 100 of the present embodiment and dried to obtain the positive electrode structure of the present embodiment.

Regarding an electrode structure 117 of a negative electrode, black lead, graphite, mesocarbon microbead and the like as the active material is dispersed in CMC (carboxymethyl cellulose) as a thickening agent, followed by mixing with SBR (styrene butadiene rubber) as a binder to give a paste. The paste is then coated as the active material forming material onto the current collector 100 of the present embodiment using copper as the substrate 103, and then the paste is dried to obtain the negative electrode structure of the present embodiment.

(7. Electrical Storage Device)

Electrical Storage Device (Electrical Double Layer Capacitor, Lithium Ion Capacitors and the like)

In general, electrical double layer capacitors and the like are safe compared with the secondary batteries. Here, in view of improving the high rate characteristics, the current collector 100 of the present embodiment can be applied for the electrical double layer capacitors and the like. The current collector 100 of the present embodiment can be applied to electrical storage devices of electrical double layer capacitors, lithium ion capacitors and the like, which require high speed charge/discharge at a high current density. The electrode structure 117 for the electrical storage device according to the present embodiment can be obtained by forming an electrode material layer 115 on the current collector 100 of the present embodiment. Here, the electrode structure 117 can be used together with a separator, an electrolyte solution and the like to manufacture the electrical storage device of the electrical double layer capacitors, lithium ion capacitors and the like. In the electrode structure 117 and the electrical storage device of the present embodiment, known parts for the electrical double layer capacitors and lithium ion capacitors can be used for the parts other than the current collector 100.

The electrode material layer 115 can be structured with a positive electrode, a negative electrode, an electrode material, a conductive material, and a binder. In the present embodiment, the afore-mentioned electrode material layer 115 is formed on the resin layer 105 of the current collector 100 of the present embodiment to give the electrode structure 117, before obtaining the electrical storage device. Here, as the electrode material, the ones conventionally used as the electrode material for the electrical double layer capacitors and for the lithium ion capacitors can be used. For example, carbon powders such as activated charcoal and black lead, and carbon fibers can be used. As the binder, PVDF (polyvinylidene difluoride), SBR, water dispersion type PTFE and the like can be used for example. Here, the electrical storage device of the present embodiment can be used to structure the electrical double layer capacitors and the lithium ion capacitors by fixing a separator in between the electrode structures 117 of the present embodiment, and then immersing the separator in an electrolyte solution. As the separator, a membrane made of polyolefin having microporous, a non-woven fabric for an electrical double layer capacitor, and the like can be used for example.

As the afore-mentioned non-aqueous electrolyte, there is no particular limitation so long as there is no side reaction such as decomposition in the voltage range used as the electrical double layer capacitors or lithium ion capacitors. For example, quarternary ammonium salts such as tetraethylammonium salt, triethylmethylammonium salt, tetrabutylammonium salt and the like can be used as the positive ion; and hexafluorophosphate, tetrafluoroborate, perchlorate and the like can be used as the negative ion.

As the afore-mentioned non-aqueous solvent, aprotic solvents such as carbonates, esters, ethers, nitriles, sulfonic acids, lactones and the like can be used. For example, one type or two or more types of non-aqueous solvents selected from ethylene carbonate (EC), propylene carbonate (PC), diethyl carbonate (DEC), dimethyl carbonate (DMC), ethylmethyl carbonate (EMC), 1,2-dimethoxyethane, 1,2-diethoxyethane, tetrahydrofuran, 2-methyltetrahydrofuran, dioxane, 1,3-dioxolane, diethylene glycol dimethyl ether, ethylene glycol dimethyl ether, acetonitrile, propionitrile, nitromethane, N,N-dimethylformamide, dimethylsulfoxide, sulforane, $\gamma$-butyrolactone and the like can be used.

The embodiments of the present invention have been described with reference to the Drawings. Here, they are merely an exemplification of the present invention, and the present invention can adopt various constituents other than those mentioned above.

**EXAMPLES**

Hereinafter, the present invention will be described in detail with reference to Examples. However, the present invention shall not be limited to these Examples.

<Example 1>

As shown in Table 1, a resin solution obtained by mixing water borne emulsion type maleic acid modified polypropylene resin (100 parts by mass) as the emulsion type polyolefin resin (polyolefin-based emulsion particles), and glycerol polyglycidyl ether (0.1 parts by mass) as the cross-linker was added with acetylene black (25 parts by mass with respect to the resin component (solids of the resin, hereinafter the same) of the resin solution). Subsequently, the mixture was dispersed for 8 hours using a ball mill, thereby giving a coating. The coating was coated on one side of an aluminum foil (JIS A1085) having a thickness of 15$\mu$m using a gravure coater so that the coating would have a thickness of 2$\mu$m (2 g/m$^2$ by coating weight). Subsequently, the coating was subjected to baking for 24 seconds with a peak metal temperature (PMT) of 110°C. Accordingly, a current collector electrode was prepared. Hereinafter, the substrate, coating, and the conditions of drying were the same, and thus their descriptions are omitted.

<Examples 2 to 16>

As the emulsion type polyolefin resin (polyolefin-based emulsion particles) shown in Table 1, (maleic acid modified) polypropylene (PP) resin, (maleic acid modified) polyethylene (PE) resin, (maleic acid modified) polyethylene-polypropylene (PE-PP) block copolymer resin, (maleic acid modified) polyethylene-polypropylene (PE-PP) graft polymer resin, or a resin mixture of (maleic acid modified) polypropylene (PP) resin and (maleic acid modified) polyethylene (PE) resin was formulated by the parts by mass as shown in Table 1. The current collector electrodes were prepared in a similar manner as Example 1.

(Comparative Examples 1 to 5)

(Maleic acid modified) polypropylene (PP) resin, PVDF (polyvinylidene difluoride), propylene (PP) resin (without modification with maleic acid), and (maleic acid modified) polyethylene (PE) resin were used as the resin component shown in Table 1, glycerol polyglycidyl ether as the epoxy-based cross-linker, hexamethoxymethylol melamine as the melamine-based cross-linker, tolylene diisocyanate as the isocyanate-based cross-linker, polyethylene glycol as the polyoxyalkylene-based cross-linker, 1-ethyl-3-(3-dimethylaminopropyl)carbodiimide hydrochloride as the carbodiimide-based cross-linker, and acetylene black as the conductive material were formulated by the parts by mass as shown in Tables 1 and 2. The current collector electrodes were prepared in a similar manner as Example 1.

Here, the non-aqueous electrolyte solution used in either one of the Examples and the Comparative Examples is described in the following PTC function measuring method.

[Table 1]

Table 1

| | Resin | | | Cross-linker |
|---|---|---|---|---|
| | Resin | | Type | |
| Example 1 | maleic acid-modified PP | | water borne emulsion | epoxy |
| Example 2 | maleic acid-modified PP | | water borne emulsion | epoxy |
| Example 3 | maleic acid-modified PP | | water borne emulsion | epoxy |

(continued)

| | Resin | | Cross-linker |
|---|---|---|---|
| | Resin | Type | |
| Example 4 | maleic acid-modified PP | water borne emulsion | epoxy |
| Example 5 | maleic acid-modified PP | water borne emulsion | epoxy |
| Example 6 | maleic acid-modified PP | water borne emulsion | epoxy |
| Example 7 | maleic acid-modified PP | water borne emulsion | melamine |
| Example 8 | maleic acid-modified PP | water borne emulsion | melamine |
| Example 9 | maleic acid-modified PP | water borne emulsion | melamine |
| Example 10 | maleic acid-modified PP | water borne emulsion | isocyanate |
| Example 11 | maleic acid-modified PP | water borne emulsion | polyethylene glycol |
| Example 12 | maleic acid-modified PP | water borne emulsion | carbodiimide |
| Example 13 | maleic acid-modified PE | water borne emulsion | melamine |
| Example 14 | block polymer of maleic acid-modified PE-PP | water borne emulsion | melamine |
| Example 15 | graft polymer of maleic acid-modified PE-PP | water borne emulsion | melamine |
| Example 16 | mixture of maleic acid-modified PP and maleic acid-modified PE | water borne emulsion | melamine |
| Comparative Example 1 | maleic acid-modified PP | water borne emulsion | none |
| Comparative Example 2 | PVDF | solvent borne solution | none |
| Comparative Example 3 | PP | water borne emulsion | epoxy |
| Comparative Example 4 | maleic acid-modified PP | solvent borne solution | epoxy |
| Comparative Example 5 | maleic acid-modified PE | solvent borne solution | epoxy |

[Table 2]

Table 2

| | formulation amount of cross-linker | formulation amount of conductive material | gel fraction | coating weight | PTC function | result of overcharge test (condition of battery) |
|---|---|---|---|---|---|---|
| | parts by mass | parts by mass | % | g/m$^2$ | | |
| Example 1 | 0.1 | 25 | 51 | 2 | B | A |
| Example 2 | 5 | 5 | 78 | 2 | A | A |
| Example 3 | 5 | 25 | 76 | 2 | A | A |
| Example 4 | 5 | 50 | 75 | 2 | A | A |
| Example 5 | 20 | 25 | 77 | 2 | A | A |
| Example 6 | 50 | 25 | 95 | 2 | A | A |
| Example 7 | 5 | 25 | 85 | 0.05 | A | A |
| Example 8 | 5 | 25 | 84 | 2 | A | A |
| Example 9 | 5 | 25 | 82 | 5 | A | A |
| Example 10 | 5 | 25 | 61 | 2 | B | A |
| Example 11 | 5 | 25 | 68 | 2 | B | A |
| Example 12 | 5 | 25 | 65 | 2 | B | A |
| Example 13 | 5 | 25 | 84 | 2 | A | A |
| Example 14 | 5 | 25 | 86 | 2 | A | A |
| Example 15 | 5 | 25 | 85 | 2 | A | A |
| Example 16 | 5 | 25 | 83 | 2 | A | A |
| Comparative Example 1 | 0 | 25 | 38 | 2 | B | B |
| Comparative Example 2 | 0 | 25 | 82 | 2 | C | B |
| Comparative Example 3 | 5 | 25 | 24 | 2 | B | B |
| Comparative Example 4 | 5 | 25 | 76 | 2 | C | B |
| Comparative Example 5 | 5 | 25 | 76 | 2 | C | B |

<PTC Function Measuring Method>

The current collectors thus obtained were cut out in a shape having a rectangular portion of 4cm x 5cm and an extended portion (a terminal portion) having a 5mm width from one end of the longitudinal side of the rectangular portion. The resin layer was removed from the terminal portion to expose the surface of the current collector, thereby preparing the test piece. Two test pieces were cut out from each of the positive electrode samples, and were allowed to come in contact with each other facially so that the measurement region would overlap (overlapping area being 20 cm$^2$) and one of the terminal portions would be arranged at one end side of the longitudinal side of the measurement region and the other terminal portion would be arranged at the other end side of the longitudinal side of the measurement region. The contacting two test pieces and the non-aqueous electrolyte solution were inserted in between two laminate films and were sealed. Here, the terminal portions were placed outside the laminate films. As the non-aqueous electrolyte solution, the ones prepared by formulating LiPF$_6$ by a concentration of 1.0M in a solvent mixture of EC and DEC (volume ratio of 1:1) were used. The terminal portions were connected to alternating current, and the sealed measurement region was held with a light force (pressure of approximately 25 N/cm$^2$) in between two plate jigs and was placed in a thermostat chamber. Change in the resistance was observed while an alternating current of 1 kHz was applied and heat with a programming rate of 5°C/min was applied. In Table 2, "A" shows that the maximum resistance was 20 times or more of the resistance at room temperature, "B" shows that the maximum resistance was 5 times or more of the resistance at room temperature, and "C" shows that the maximum resistance was less than 5 times of the resistance at room temperature. When the maximum resistance is 5 times or more of the resistance at room temperature, the shut down can be performed sufficiently.

(1) Gel Fraction Measuring Method

Gel fraction was measured to evaluate the cross-linking conditions. As the gel fraction measurement, the ratio of the resin which does not dissolve after immersion in xylene due to cross-linking was measured. Here, the ratio was obtained as the ratio with respect to the entire resin before immersion in xylene. Specifically, the amount of heat released or the amount of heat absorbed at the characteristic peak (for example, the crystallization peak seen in the cooling curve for PP for example) seen in the DSC measurement before and after immersion in xylene is quantitatively analyzed to obtain the gel fraction.

Measurement Apparatus: DSC-60A (available from Shimadzu Corporation)
Measurement Conditions: 10°C/min (heating curve), 10°C/min (cooling curve), measurement range 40 to 200°C
Sample Amount: approximately 5 mg
Xylene Immersion: 80°C x 1 hour
Drying After Immersion: vacuum drying at 80°C for 15 hours

The gel fraction is obtained as follows (example for PP).

```
Gel Fraction (%) = (amount of resin after immersion) /
(amount of resin before immersion) x 100
                  = (amount of heat released in the
crystallization peak in the cooling curve after immersion) /
(amount of heat released in the crystallization peak in the
cooling curve before immersion) x 100
```

(2) Preparation of Battery

(Positive Electrode)

The current collector prepared by the afore-mentioned method having a resin layer thereon was coated with an active material paste ($LiMn_2O_4$/AB/PVDF = 89.5/5/5.5, NMP (N-methyl-2-pyrrolidone) solvent) and was dried. The current collector was then pressed to form an active material layer having a thickness of 60$\mu$m.

(Negative Electrode)

A copper foil having a thickness of 10$\mu$m was coated with an active material paste (MCMB (mesocarbon microbead)/AB/PVDF = 93/2/5, NMP solvent) and was dried. The current collector was then pressed to form an active material layer having a thickness of 40$\mu$m.

(3) Preparation of Cylindrical Type Lithium Ion Battery ($\Phi$18 mm x 65 mm length in axial direction)

The positive electrode, negative electrode, electrolyte solution (1M $LiPF_6$, EC (ethylene carbonate)/MEC (methyl ethyl carbonate) = 3/7), and a separator (25$\mu$m thickness, micropore polyethylene film) were wound, followed by welding of leads to each of the battery poles. Then, the battery was cased.

(4) Overcharge Test

The afore-mentioned battery was charged to 4.2V at 1.5 mA/cm$^2$ by constant current and constant voltage. Then, the fully charged battery was further charged up to 250% at 5A. The conditions of the battery such as whether fuming occurred or not were investigated. In Table 2, "A" shows that there was no change, and "B" shows that there was fuming or ignition.

<Discussion of Results>

The results obtained are shown in Tables 1 and 2.

Examples 1 to 16: PTC function was realized, the gel fraction was in the desirable range, and the decrease in resistance was suppressed, thereby observing no change in the overcharge test.

Comparative Example 1: Since no cross-linker was used, the resistance decreased after the realization of the PTC function, thereby observing fuming.

Comparative Example 2: Since PVDF was used, the PTC function was not realized, thereby observing fuming.

Comparative Example 3: Since olefin without end terminal group was used, cross-linking did not occur although suitable amount of the cross-linker was formulated and the resistance decreased after the realization of the PTC function, thereby observing fuming.

Comparative Examples 4, 5: Since solvent borne olefin was used, the PTC function was not sufficiently realized, thereby observing fuming.

The present invention has been explained with reference to Examples. These Examples are provided merely as an exemplification, and it should be understood by the person having ordinary skill in the art that various modification can be made, and such modified examples are in the scope of the present invention.

For example, a surfactant can be formulated in the afore-mentioned coating (paste). By formulating the surfactant, the emulsion type polyolefin resin (polyolefin-based emulsion particles) can be dispersed stably in the coating (paste).

## EXPLANATION OF SYMBOLS

| | |
|---|---|
| 100: | current collector |
| 103: | conductive substrate |
| 105: | resin layer (resin layer for current collector |
| 115: | active material layer of electrode material layer |
| 117: | electrode structure |
| 121: | conductive material |
| 123: | cross-linking group |
| 125: | polyolefin-based emulsion particle |
| 129: | polyolefin-based resin |
| 131: | cross-linker |

## Claims

1.   A current collector, comprising:

   a conductive substrate; and
   a resin layer provided on at least one side of the conductive substrate; wherein
   the resin layer is formed with a paste comprising:

      polyolefin-based emulsion particles;
      a conductive material; and
      a cross-linker; and

   the polyolefin-based emulsion particles contain a polyolefin-based resin, both end terminals of the polyolefin-based resin being modified with carboxylic acid or carboxylic acid anhydride.

2.   The current collector of Claim 1, wherein the polyolefin-based emulsion particles are selected from the group consisting of a polypropylene resin, polyethylene resin, and a polypropylene-polyethylene copolymer resin, both end terminals of the resins being modified with carboxylic acid or carboxylic acid anhydride.

3.   The current collector of Claim 1 or 2, wherein the cross-linker comprises one or more type of cross-linker selected from the group consisting of an epoxy-based cross-linker, a melamine-based cross-linker, an isocyanate-based cross-linker, a polyoxyalkylene-based cross-linker, and a carbodiimide-based cross-linker.

4. The current collector of any one of Claims 1 to 3, wherein the conductive material comprises carbon powders or metal powders.

5. The current collector of any one of Claims 1 to 4, wherein the conductive substrate is aluminum, aluminum alloy, or copper.

6. The current collector of any one of Claims 1 to 5, wherein the paste contains the conductive material by 5 to 50 parts by mass with respect to 100 parts by mass of a resin component.

7. The current collector of any one of Claims 1 to 6, wherein a gel fraction of the resin layer is 50 to 95%.

8. The current collector of any one of Claims 1 to 7, wherein a coating amount of the paste is 0.05 to 5 $g/m^2$.

9. An electrode structure, comprising:

   the current collector of any one of Claims 1 to 8; and
   an active material layer or an electrode material layer formed on the resin layer of the current collector.

10. An electrical storage device, comprising the electrode structure of Claim 9.

11. The electrical storage device of Claim 10, wherein the electrical storage device is one or more type of electrical storage devices selected from the group consisting of a non-aqueous electrolyte battery, an electrical double layer capacitor, and a lithium ion capacitor.

12. A composition for current collector, the composition being coated onto a conductive substrate and is then cross-linked to obtain a current collector, comprising:

   polyolefin-based emulsion particles;
   a conductive material; and
   a cross-linker; wherein
   the polyolefin-based emulsion particles comprises a polyolefin-based resin, both end terminals of the polyolefin-based resin being modified with carboxylic acid or carboxylic acid anhydride.

**Patentansprüche**

1. Stromkollektor, umfassend:

   ein leitfähiges Substrat und
   eine auf zumindest einer Seite des leitfähigen Substrats bereitgestellte Harzschicht; wobei
   die Harzschicht mit einer Paste ausgebildet ist, die Folgendes umfasst:

      Emulsionspartikel auf polyolefinischer Basis;
      ein leitfähiges Material und
      einen Vernetzer; und

   die Emulsionspartikel auf polyolefinischer Basis ein Harz auf polyolefinischer Basis enthalten, wobei beide terminale Enden des Harzes auf polyolefinischer Basis mit Carbonsäure oder Carbonsäureanhydrid modifiziert sind.

2. Stromkollektor nach Anspruch 1, wobei die Emulsionspartikel auf polyolefinischer Basis ausgewählt sind aus der Gruppe bestehend aus einem Polypropylenharz, einem Polyethylenharz und einem Polypropylen-Polyethylen-Copolymerharz, wobei beide terminale Enden der Harze mit Carbonsäure oder Carbonsäureanhydrid modifiziert sind.

3. Stromkollektor nach Anspruch 1 oder 2, wobei der Vernetzer einen oder mehr Typen von Vernetzern, ausgewählt aus der Gruppe bestehend aus einem Vernetzer auf Epoxibasis, einem Vernetzer auf Melaninbasis, einem Vernetzer auf Isocyanatbasis, einem Vernetzer auf Polyoxyalkylenbasis und einem Vernetzer auf Carbodiimidbasis, umfasst.

4.  Stromkollektor nach einem der Ansprüche 1 bis 3, wobei das leitfähige Material Kohlenstoffpulver oder Metallpulver umfasst.

5.  Stromkollektor nach einem der Ansprüche 1 bis 4, wobei das leitfähige Substrat Aluminium, Aluminiumlegierung oder Kupfer ist.

6.  Stromkollektor nach einem der Ansprüche 1 bis 5, wobei die Paste das leitfähige Material in 5 bis 50 Massenanteilen in Bezug auf 100 Massenanteile einer Harzkomponente enthält.

7.  Stromkollektor nach einem der Ansprüche 1 bis 6, wobei ein Gelanteil der Harzschicht 50 bis 95 % beträgt.

8.  Stromkollektor nach einem der Ansprüche 1 bis 7, wobei eine Beschichtungsmenge der Paste 0,05 bis 5 g/m$^2$ beträgt.

9.  Elektrodenstruktur, umfassend:

    den Stromkollektor nach einem der Ansprüche 1 bis 8 und
    eine auf der Harzschicht des Stromkollektors ausgebildete aktive Materialschicht oder Elektrodenmaterialschicht.

10. Elektrische Speicherungsvorrichtung, umfassend die Elektrodenstruktur nach Anspruch 9.

11. Elektrische Speicherungsvorrichtung nach Anspruch 10, wobei die elektrische Speicherungsvorrichtung ein oder mehr Typen elektrischer Speicherungsvorrichtungen, ausgewählt aus der Gruppe bestehend aus einer Batterie mit nichtwässrigen Elektrolyten, einem elektrischen Doppelschichtkondensator und einem Lithium-Ionen-Kondensator, ist.

12. Zusammensetzung für einen Stromkollektor, wobei die Zusammensetzung geeignet ist, auf ein leitfähiges Substrat aufgebracht und anschließend vernetzt zu werden, um einen Stromkollektor zu erhalten, umfassend:

    Emulsionspartikel auf polyolefinischer Basis;
    ein leitfähiges Material und
    einen Vernetzer; wobei
    die Emulsionspartikel auf polyolefinischer Basis ein Harz auf polyolefinischer Basis umfassen, wobei beide terminale Enden des Harzes auf polyolefinischer Basis mit Carbonsäure oder Carbonsäureanhydrid modifiziert sind.

**Revendications**

1.  Collecteur de courant, comprenant :

    un substrat conducteur ; et
    une couche de résine prévue sur au moins une face du substrat conducteur ; où
    la couche de résine est formée avec une pâte comprenant :

        des particules d'émulsion à base de polyoléfine ;
        un matériau conducteur ; et
        un agent réticulant ; et où

    les particules d'émulsion à base de polyoléfine contiennent une résine à base de polyoléfine, les deux extrémités terminales de la résine à base de polyoléfine étant modifiées avec un acide carboxylique ou un anhydride d'acide carboxylique.

2.  Collecteur de courant selon la revendication 1, où les particules d'émulsion à base de polyoléfine sont sélectionnées dans le groupe comprenant une résine polypropylène, une résine polyéthylène, et une résine copolymère polypropylène-polyéthylène, les deux extrémités terminales des résines étant modifiées avec un acide carboxylique ou un anhydride d'acide carboxylique.

3. Collecteur de courant selon la revendication 1 ou la revendication 2, où l'agent réticulant comprend un ou plusieurs types d'agents réticulants sélectionnés dans le groupe comprenant un agent réticulant à base époxy, un agent réticulant à base mélamine, un agent réticulant à base isocyanate, un agent réticulant à base polyoxyalkylène, et un agent réticulant à base carbodiimide.

4. Collecteur de courant selon l'une des revendications 1 à 3, où le matériau conducteur comprend des poudres de carbone ou des poudres métalliques.

5. Collecteur de courant selon l'une des revendications 1 à 4, où le substrat conducteur est en aluminium, en alliage d'aluminium ou en cuivre.

6. Collecteur de courant selon l'une des revendications 1 à 5, où la pâte contient le matériau conducteur dans une teneur comprise entre 5 et 50 parties en masse par rapport aux 100 parties d'un composant de la résine.

7. Collecteur de courant selon l'une des revendications 1 à 6, où une fraction de gel de la couche de résine est présente dans une teneur comprise entre 50 et 95 %.

8. Collecteur de courant selon l'une des revendications 1 à 7, où la masse surfacique d'un revêtement de la pâte est comprise entre 0,05 et 5 g/m$^2$.

9. Structure d'électrode, comprenant :

le collecteur de courant selon l'une des revendications 1 à 8 ; et
une couche de matériau actif ou une couche de matériau d'électrode formée sur la couche de résine du collecteur de courant.

10. Dispositif d'accumulation électrique, comprenant la structure d'électrode selon la revendication 9.

11. Dispositif d'accumulation électrique selon la revendication 10, où ledit dispositif d'accumulation électrique est d'un ou de plusieurs types sélectionnés dans le groupe comprenant une batterie à électrolyte non aqueux, un condensateur à couche double électrique et un condensateur lithium-ion.

12. Composition pour collecteur de courant, ladite composition étant prévue pour revêtir un substrat conducteur et être réticulée ensuite afin d'obtenir un collecteur de courant, comprenant :

des particules d'émulsion à base de polyoléfine ;
un matériau conducteur ; et
un agent réticulant ; où
les particules d'émulsion à base de polyoléfine comprennent une résine à base de polyoléfine, les deux extrémités terminales de la résine à base de polyoléfine étant modifiées avec un acide carboxylique ou un anhydride d'acide carboxylique.

[FIG. 1]

[FIG. 2]

EP 2 922 124 B1

[FIG. 3]

[FIG. 4]

19

[FIG. 5]

[FIG. 6]

**EP 2 922 124 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012104422 A
- JP 2001357854 A
- JP 2002343606 A